# EUROPEAN PATENT APPLICATION

(11) **EP 4 529 116 A1**
(43) Date of publication of application: **26.03.2025**
(21) Application number: 23823240.9
(22) Date of filing: 16.06.2023
(51) Int. Cl.: H04L 41/0803

(54) **EDGE NODE DEPLOYMENT METHOD BASED ON CLOUD COMPUTING TECHNOLOGY, AND CLOUD MANAGEMENT PLATFORM**

(30) Priority: 16.06.2022 CN 202210686912; 29.09.2022 CN 202211203001
(71) Applicant: Huawei Cloud Computing Technologies Co., Ltd., Guiyang, Guizhou 550025 (CN)
(72) Inventor: GUO, Bin, Guiyang, Guizhou 550025 (CN)
(74) Representative: Körber, Martin Hans
(86) International application number: PCT/CN2023/100586
(87) International publication number: WO 2023/241674

(57) **Abstract**

This application discloses an edge node deployment method based on a cloud computing technology and a cloud management platform. Regardless of a quantity of applications that need to be used to complete a service specified by a tenant, a plurality of edge nodes forming a resource pool may jointly support a plurality of applications, so that the service specified by the tenant is successfully completed, to meet a service requirement of the tenant. The method in this application includes: A cloud management platform provides an interface, where the interface is configured to obtain a resource pool deployment request that is input by the tenant and that is for M edge nodes, an i^{th} group of applications in M groups of applications is deployed on an i^{th} edge node in the M edge nodes, M≥2, M≥i≥1, the M groups of applications are obtained by dividing N applications, and N≥M. The cloud management platform sets, based on the resource pool deployment request, an edge node resource pool including the M edge nodes, where every two edge nodes in the edge node resource pool trust each other and have a resource sharing capability.

## Description

This application claims priorities to Chinese Patent Application No. 202210686912.3, filed with the China National Intellectual Property Administration on June 16, 2022 and entitled "EDGE NODE SCHEDULING METHOD AND APPARATUS", and to Chinese Patent Application No. 202211203001.7, filed with the China National Intellectual Property Administration on September 29, 2022 and entitled "EDGE NODE DEPLOYMENT METHOD BASED ON CLOUD COMPUTING TECHNOLOGY AND CLOUD MANAGEMENT PLATFORM", both of which are incorporated herein by reference in their entireties.

### TECHNICAL FIELD

Embodiments of this application relate to the field of cloud technologies, and in particular, to an edge node deployment method based on a cloud computing technology and a cloud management platform.

### BACKGROUND

As deployment of a cloud service system gradually extends to edges, developers of the cloud service system may deploy miniaturized edge nodes in a data center of tenants or an equipment room of partners, to provide cloud services for the tenants by using resources of the edge nodes. Because the edge nodes are usually geographically close to the tenant side, a low latency requirement of the tenants for data processing can be supported.

A system provided in related technologies usually includes an on-premises edge node and a cloud management platform in a cloud. When a service needs to be completed, tenants may deploy, on the edge node via the cloud management platform, a plurality of applications that can complete the service. In this case, the edge node may process, by using (running) the plurality of applications, data to be processed by the tenants, to obtain processed data, and return the data to the tenants for use.

However, for deployment convenience and miniaturization, hardware resources of the edge node are usually fixed, difficult to implement elastic capacity expansion. Because a service specified by a tenant requires the edge node to run a plurality of applications, if there are a small quantity of computing resources of the edge node, it is difficult for the edge node to support the plurality of applications at the same time. Consequently, the edge node fail to complete the service specified by the tenant, failing to meet a service requirement of the tenant.

### SUMMARY

Embodiments of this application provide an edge node deployment method based on a cloud computing technology and a cloud management platform. Regardless of a quantity of applications that need to be used to complete a service specified by a tenant, a plurality of edge nodes forming a resource pool may jointly support a plurality of applications, so that the service specified by the tenant is successfully completed, to meet a service requirement of the tenant.

A first aspect of embodiments of this application provides an edge node deployment method based on a cloud computing technology. The method is applied to a cloud management platform, the cloud management platform manages an infrastructure that provides a cloud service, the cloud management platform is connected to M on-premises edge nodes, and the method includes:

When a tenant needs to process a service, the cloud management platform may provide a resource pool deployment interface for a client used by the tenant. Therefore, the tenant may send a resource pool deployment request for the M edge nodes to the resource pool deployment interface via the client, so that the cloud management platform receives, through the resource pool deployment interface, the resource pool deployment request sent by the client. After receiving the resource pool deployment request, the cloud management platform needs to be connected to the M edge nodes based on the resource pool deployment request.

After determining, based on the resource pool deployment request, that the M edge nodes need to be connected, the cloud management platform may enable the M edge nodes to complete a communication connection, so that the M edge nodes form an edge node resource pool. It should be noted that, in the resource pool, an i^{th} group of applications in M groups of applications is deployed on an i^{th} edge node in the M edge nodes. The M groups of applications are obtained by dividing N applications used to complete the service of the tenant. In addition, in the resource pool, any two edge nodes trust each other and have a resource sharing capability. It can be learned that the M edge nodes may jointly complete the service of the tenant. N≥M≥2, and i=1, ..., M.

It can be learned from the foregoing method that the cloud management platform may first obtain, through the interface, the resource pool deployment request that is input by the tenant and that is for the M edge nodes, where the i^{th} group of applications in the M groups of applications is deployed on the i^{th} edge node in the M edge nodes, and the M groups of applications are obtained by dividing the N applications. Then, the cloud management platform may create, based on the resource pool deployment request, the edge node resource pool including the M edge nodes, where every two edge nodes in the edge node resource pool trust each other and have the resource sharing capability. In the foregoing process, the cloud management platform may construct, for the tenant, the edge node resource pool including the M edge nodes. In the resource pool, the M edge nodes trust each other and can implement resource sharing. In addition, the N applications used to complete the service that needs to be processed by the tenant are deployed on the M edge nodes. In other words, the M edge nodes may be jointly responsible for and complete the service that needs to be processed by the tenant. It can be learned that, regardless of a value of N, the M edge nodes forming the edge node resource pool may implement the resource sharing, and support running of the N applications as a whole, to jointly complete the service that needs to be processed by the tenant, and therefore, a service requirement of the tenant can be met.

In a possible implementation, that the cloud management platform sets, based on the resource pool deployment request, the edge node resource pool including the M edge nodes includes: The cloud management platform generates a certificate chain based on a digital certification authority (certification authority, CA) certificate, where the certificate chain includes M certificates; and sends an i^{th} certificate in the M certificates to the i^{th} edge node in the M edge nodes, where the i^{th} certificate indicates that the i^{th} edge node is trustworthy in the edge node resource pool. In the foregoing implementation, after receiving the resource pool deployment request, the cloud management platform may parse the request to obtain resource information required by the tenant and the CA certificate provided by the tenant. In this case, after determining, based on the resource information, that the M edge nodes need to be connected, the cloud management platform may generate, based on the CA certificate provided by the tenant, the M certificates forming the certificate chain. Then, the cloud management platform may deliver the i^{th} certificate in the M certificates to the i^{th} edge node in the M edge nodes, to be specific, deliver a 1^{st} certificate to a 1^{st} edge node, deliver a 2^{nd} certificate to a 2^{nd} edge node, ..., and deliver an M^{th} certificate to an M^{th} edge node. Therefore, the cloud management platform may successfully issue the M certificates to the M edge nodes. Because the M certificates are in a same certificate chain, in other words, the M certificates are mutually authorized and mutually trusted, the M edge nodes may perform mutual authentication based on the M certificates. After the authentication is completed, it is determined that the other party is trustworthy, to complete the communication connection. In this way, the M edge nodes form the resource pool, and the i^{th} certificate in the M certificates used as an identity card of the i^{th} edge node in the M edge nodes in the resource pool indicates that the i^{th} edge node is trustworthy in the resource pool. Therefore, other edge nodes in the M edge nodes may share resources with the i^{th} edge node.

In a possible implementation, the method further includes: If the i^{th} edge node is faulty, the cloud management platform migrates the i^{th} certificate and the i^{th} group of applications from the i^{th} edge node to a target edge node other than the M edge nodes, and uses the target edge node as a new i^{th} edge node in the M edge nodes. In the foregoing implementation, in the M edge nodes, if the i^{th} edge node is faulty, the cloud management platform migrates an i^{th} device certificate and the i^{th} group of applications from the i^{th} edge node to the target edge node other than the M edge nodes, and replaces the original i^{th} edge node with the target edge node, so that the target edge node is used as the new i^{th} edge node in the M edge nodes. In this way, the new i^{th} edge node and the original i^{th} edge node are responsible for the same service. Therefore, M updated edge nodes may also jointly complete the service of the user.

In a possible implementation, the method further includes: The cloud management platform sets an application scheduling mechanism on the i^{th} edge node, to enable the i^{th} edge node to migrate a part of applications included in the i^{th} group of applications to a j^{th} edge node if the i^{th} edge node determines that a resource required for running the i^{th} group of applications is greater than a preset resource threshold, where j=1, ..., M, and j≠i. In the foregoing implementation, the cloud management platform may set the application scheduling mechanism on the M edge nodes. Based on this mechanism, the i^{th} edge node may detect whether the resource required for running the i^{th} group of applications is greater than the preset resource threshold. If the i^{th} edge node determines that the resource required for running the i^{th} group of applications is greater than the preset resource threshold, the i^{th} edge node may first select the j^{th} edge node, and migrate the part of applications included in the i^{th} group of applications to the j^{th} edge node in the M edge nodes. In this way, the i^{th} edge node may automatically adjust services that the i^{th} edge node is to be responsible for, and complete service transfer, that is, the i^{th} edge node may reduce a quantity of service load that the i^{th} edge node is responsible for, and increase a quantity of service load that the j^{th} edge node is responsible for. It can be learned that, if the i^{th} edge node finds that the i^{th} edge node cannot bear an i^{th} subservice, the i^{th} edge node may automatically adjust the i^{th} subservice that the i^{th} edge node is responsible for, to implement service transfer, and further reduce labor costs.

In a possible implementation, the j^{th} edge node is any one of edge nodes other than the i^{th} edge node in the M edge nodes, or the j^{th} edge node is an edge node other than the i^{th} edge node in the M edge nodes. In the foregoing implementation, the i^{th} edge node may select the j^{th} edge node in the following manners. (1) The i^{th} edge node may determine any one of the edge nodes other than the i^{th} edge node in the M edge nodes as the j^{th} edge node. (2) The i^{th} edge node may determine an edge node with a largest available resource in the edge nodes other than the i^{th} edge node in the M edge nodes as the j^{th} edge node. (3) The i^{th} edge node may determine an edge node other than the i^{th} edge node in the M edge nodes as the j^{th} edge node.

In a possible implementation, the resource includes at least one of the following: a computing resource, a storage resource, and a network resource.

A second aspect of embodiments of this application provides a cloud management platform. The cloud management platform manages an infrastructure that provides a cloud service, the cloud management platform is connected to M on-premises edge nodes, and the cloud management platform includes: a provision module, configured to provide an interface, where the interface is configured to obtain a resource pool deployment request that is input by a tenant and that is for the M edge nodes, an i^{th} group of applications in M groups of applications is deployed on an i^{th} edge node in the M edge nodes, M≥2, M≥i≥1, the M groups of applications are obtained by dividing N applications, and N≥M; and a setting module, configured to set, based on the resource pool deployment request, an edge node resource pool including the M edge nodes, where every two edge nodes in the edge node resource pool trust each other and have a resource sharing capability.

It can be learned from the foregoing cloud management platform that the cloud management platform may first obtain, through the interface, the resource pool deployment request that is input by the tenant and that is for the M edge nodes, where the i^{th} group of applications in the M groups of applications is deployed on the i^{th} edge node in the M edge nodes, and the M groups of applications are obtained by dividing the N applications. Then, the cloud management platform may create, based on the resource pool deployment request, the edge node resource pool including the M edge nodes, where every two edge nodes in the edge node resource pool trust each other and have the resource sharing capability. In the foregoing process, the cloud management platform may construct, for the tenant, the edge node resource pool including the M edge nodes. In the resource pool, the M edge nodes trust each other and can implement resource sharing. In addition, the N applications used to complete a service that needs to be processed by the tenant are deployed on the M edge nodes. In other words, the M edge nodes may be jointly responsible for and complete the service that needs to be processed by the tenant. It can be learned that, regardless of a value of N, the M edge nodes forming the edge node resource pool may implement the resource sharing, and support running of the N applications as a whole, to jointly complete the service that needs to be processed by the tenant, and therefore, a service requirement of the tenant can be met.

In a possible implementation, the setting module is configured to generate a certificate chain based on a CA certificate, where the certificate chain includes M certificates, and send an i^{th} certificate in the M certificates to the i^{th} edge node in the M edge nodes, where the i^{th} certificate indicates that the i^{th} edge node is trustworthy in the edge node resource pool.

In a possible implementation, the cloud management platform further includes a migration module, configured to: if the i^{th} edge node is faulty, migrate the i^{th} certificate and the i^{th} group of applications from the i^{th} edge node to a target edge node other than the M edge nodes, and use the target edge node as a new i^{th} edge node in the M edge nodes.

In a possible implementation, the cloud management platform further includes: setting an application scheduling mechanism on the i^{th} edge node, to enable the i^{th} edge node to migrate a part of applications included in the i^{th} group of applications to a j^{th} edge node if the i^{th} edge node determines that a resource required for running the i^{th} group of applications is greater than a preset resource threshold, where j=1, ..., M, and j≠i.

In a possible implementation, the j^{th} edge node is any one of edge nodes other than the i^{th} edge node in the M edge nodes, or the j^{th} edge node is an edge node other than the i^{th} edge node in the M edge nodes.

In a possible implementation, the resource includes at least one of the following: a computing resource, a storage resource, and a network resource.

A third aspect of embodiments of this application provides an edge node deployment system. The system includes a cloud management platform, an infrastructure, and M edge nodes, the cloud management platform manages the infrastructure that provides a cloud service, and the cloud management platform is connected to the M on-premises edge nodes. The cloud management platform is configured to provide an interface, where the interface is configured to obtain a resource pool deployment request that is input by a tenant and that is for the M edge nodes, an i^{th} group of applications in M groups of applications is deployed on an i^{th} edge node in the M edge nodes, M≥2, M≥i≥1, the M groups of applications are obtained by dividing N applications, and N≥M. The cloud management platform is configured to set, based on the resource pool deployment request, an edge node resource pool including the M edge nodes, where every two edge nodes in the edge node resource pool trust each other and have a resource sharing capability.

It can be learned from the foregoing system that the cloud management platform may first obtain, through the interface, the resource pool deployment request that is input by the tenant and that is for the M edge nodes, where the i^{th} group of applications in the M groups of applications is deployed on the i^{th} edge node in the M edge nodes, and the M groups of applications are obtained by dividing the N applications. Then, the cloud management platform may create, based on the resource pool deployment request, the edge node resource pool including the M edge nodes, where every two edge nodes in the edge node resource pool trust each other and have the resource sharing capability. In the foregoing process, the cloud management platform may construct, for the tenant, the edge node resource pool including the M edge nodes. In the resource pool, the M edge nodes trust each other and can implement resource sharing. In addition, the N applications used to complete a service that needs to be processed by the tenant are deployed on the M edge nodes. In other words, the M edge nodes may be jointly responsible for and complete the service that needs to be processed by the tenant. It can be learned that, regardless of a value of N, the M edge nodes forming the edge node resource pool may implement the resource sharing, and support running of the N applications as a whole, to jointly complete the service that needs to be processed by the tenant, and therefore, a service requirement of the tenant can be met.

In a possible implementation, the cloud management platform is configured to generate a certificate chain based on a CA certificate, where the certificate chain includes M certificates, and send an i^{th} certificate in the M certificates to the i^{th} edge node in the M edge nodes, where the i^{th} certificate indicates that the i^{th} edge node is trustworthy in the edge node resource pool.

In a possible implementation, the cloud management platform is further configured to: if the i^{th} edge node is faulty, migrate the i^{th} certificate and the i^{th} group of applications from the i^{th} edge node to a target edge node other than the M edge nodes, and use the target edge node as a new i^{th} edge node in the M edge nodes.

In a possible implementation, the cloud management platform is further configured to set an application scheduling mechanism on the i^{th} edge node, to enable the i^{th} edge node to migrate a part of applications included in the i^{th} group of applications to a j^{th} edge node if the i^{th} edge node determines that a resource required for running the i^{th} group of applications is greater than a preset resource threshold, where j=1, ..., M, and j≠i.

In a possible implementation, the j^{th} edge node is any one of edge nodes other than the i^{th} edge node in the M edge nodes, or the j^{th} edge node is an edge node other than the i^{th} edge node in the M edge nodes.

In a possible implementation, the resource includes at least one of the following: a computing resource, a storage resource, and a network resource.

A fourth aspect of embodiments of this application provides a cloud management platform. The cloud management platform includes a memory and a processor, the memory stores code, and the processor is configured to execute the code. When the code is executed, the cloud management platform performs the method in any one of the first aspect or the possible implementations of the first aspect.

A fifth aspect of embodiment of this application provides a computer storage medium. The computer storage medium stores a computer program, and when the program is executed by a computer, the computer is enabled to perform the method in any one of the first aspect or the possible implementations of the first aspect.

A sixth aspect of embodiments of this application provides a computer program product. The computer program product stores instructions. When the instructions are executed by a computer, the computer is enabled to perform the method in the first aspect or any one of the possible implementations of the first aspect.

In embodiments of this application, the cloud management platform may first obtain, through the interface, the resource pool deployment request that is input by the tenant and that is for the M edge nodes, where the i^{th} group of applications in the M groups of applications is deployed on the i^{th} edge node in the M edge nodes, and the M groups of applications are obtained by dividing the N applications. Then, the cloud management platform may create, based on the resource pool deployment request, the edge node resource pool including the M edge nodes, where every two edge nodes in the edge node resource pool trust each other and have the resource sharing capability. In the foregoing process, the cloud management platform may construct, for the tenant, the edge node resource pool including the M edge nodes. In the resource pool, the M edge nodes trust each other and can implement resource sharing. In addition, the N applications used to complete the service that needs to be processed by the tenant are deployed on the M edge nodes. In other words, the M edge nodes may be jointly responsible for and complete the service that needs to be processed by the tenant. It can be learned that, regardless of the value of N, the M edge nodes forming the edge node resource pool may implement the resource sharing, and support the running of the N applications as a whole, to jointly complete the service that needs to be processed by the tenant, and therefore, the service requirement of the tenant can be met.

### BRIEF DESCRIPTION OF DRAWINGS

FIG. 1 is a diagram of a structure of an edge node deployment system according to an embodiment of this application;
FIG. 2 is a schematic flowchart of an edge node deployment method based on a cloud computing technology according to an embodiment of this application;
FIG. 3 is a diagram of a resource pool deployment interface according to an embodiment of this application;
FIG. 4 is another diagram of a resource pool deployment interface according to an embodiment of this application;
FIG. 5 is a diagram of another structure of an edge node deployment system according to an embodiment of this application;
FIG. 6 is a diagram of an application deployment interface according to an embodiment of this application;
FIG. 7 is a diagram of another structure of an edge node deployment system according to an embodiment of this application;
FIG. 8 is a diagram of another structure of an edge node deployment system according to an embodiment of this application;
FIG. 9 is a diagram of another structure of an edge node deployment system according to an embodiment of this application;
FIG. 10 is a diagram of another structure of an edge node deployment system according to an embodiment of this application;
FIG. 11 is a diagram of a structure of a cloud management platform according to an embodiment of this application; and
FIG. 12 is a diagram of another structure of a cloud management platform according to an embodiment of this application.

### DESCRIPTION OF EMBODIMENTS

Embodiments of this application provide an edge node deployment method based on a cloud computing technology and a cloud management platform. Regardless of a quantity of applications that need to be used to complete a service specified by a tenant, a plurality of edge nodes forming a resource pool may jointly support a plurality of applications, so that the service specified by the tenant is successfully completed, to meet a service requirement of the tenant.

In the specification, the claims, and the accompanying drawings of this application, the terms "first", "second", and the like are intended to distinguish between similar objects but do not necessarily indicate a specific order or sequence. It should be understood that the terms used in such a way are interchangeable in appropriate circumstances. This is merely a distinguishing manner used when objects having a same attribute are described in embodiments of this application. In addition, the terms "include", "contain" and any other variants thereof mean to cover a non-exclusive inclusion, so that a process, a method, a system, a product, or a device that includes a series of units is not necessarily limited to those units, but may include other units not expressly listed or inherent to such a process, method, product, or device.

As deployment of a cloud service system gradually extends to edges, developers of the cloud service system may deploy miniaturized edge nodes in a data center of tenants or an equipment room of partners, to provide cloud services for the tenants by using resources of the edge nodes. Because the edge nodes are usually geographically close to the tenant side, a low latency requirement of the tenants for data processing can be supported.

A system provided in related technologies usually includes an on-premises edge node and a cloud management platform in a cloud. When a service needs to be completed, tenants may deploy, on the edge node via the cloud management platform, a plurality of applications that can complete the service. In this case, the edge node may process, by using (running) the plurality of applications, data to be processed by the tenants, to obtain a data processing result, and return the data processing result to the tenants for use. For example, it is assumed that the edge node is an industrial computer in a workshop. To meet a service requirement of the edge node, the tenant may deploy a series of applications on the industrial computer via the cloud management platform, including a data collection application, a data analysis application, a data modeling application, and the like. In this case, the tenant may start and run these applications on the industrial computer via the cloud management platform, so that the industrial computer collects to-be-processed data by using the data collection application, analyzes the to-be-processed data by using the data analysis application, to obtain a corresponding analysis result, and then establishes a corresponding model by using the data modeling application based on the analysis result, to output the model for the tenant to use.

However, for deployment convenience and miniaturization, hardware resources of the edge node are usually fixed, difficult to implement elastic capacity expansion. Because a service specified by a tenant requires the edge node to run a plurality of applications, if there are a small quantity of computing resources of the edge node, it is difficult for the edge node to support the plurality of applications at the same time. Consequently, the edge node cannot successfully complete the service specified by the tenant, failing to meet a service requirement of the tenant. The foregoing example is still used. If CPU resources of the industrial computer are insufficient, that is, computing power of the industrial computer is low, and it is insufficient for the industrial computer to run such computer-power-intensive applications as a data analysis application and a data modeling application at the same time, resulting in problems such as frame freezing and misoperation in a process in which the industrial computer establishes a model based on analysis results. As a result, the industrial computer cannot meet the service requirement of the tenant.

Further, in a system provided in related technologies, different edge nodes may implement different service requirements, in other words, services that different edge nodes are responsible for are usually different, and the services that different edge nodes are responsible for are manually specified by the tenant. After a specific service is specified for an edge node, if the edge node cannot bear the service that the edge node is to be responsible for (for example, the edge node finds that resources required for running an application of the edge node are too large to cause the edge node to be overloaded), the tenant needs to perform a manual operation to adjust the service that the edge node is to be responsible for. This is labor-consuming.

Further, in the system provided in related technologies, many tenants have digital transformation requirements and usually encounter live network reconstruction problems. The tenants need to newly purchase hardware as edge nodes. However, existing hardware devices of tenants on site have to be discarded because they are old and have low computing power, causing high device costs. In addition, when an edge node is faulty, a service is usually interrupted, and a new edge node can only be deployed through hardware replacement, further causing high device costs.

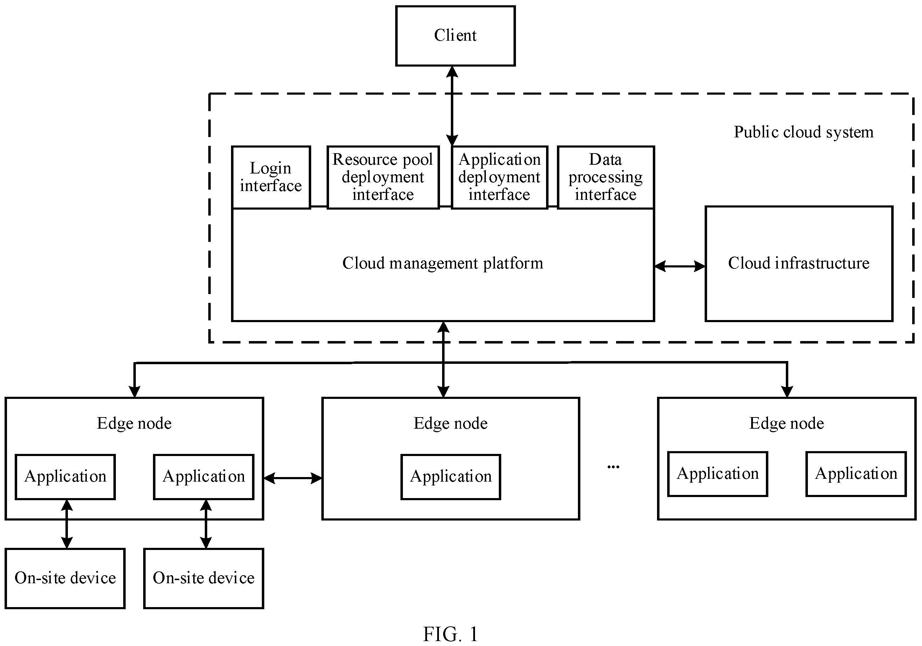

To resolve the foregoing problem, an embodiment of this application provides an edge node deployment method based on a cloud computing technology. The method may be implemented by using an edge node deployment system. FIG. 1 is a diagram of a structure of an edge node deployment system according to an embodiment of this application. As shown in FIG. 1, the edge node deployment system includes a plurality of on-premises edge nodes, a cloud management platform disposed in a cloud, and a cloud infrastructure. In other words, the cloud management platform and the cloud infrastructure that are far away from a tenant side may form a public cloud system that provides a cloud service for a tenant, and the plurality of edge nodes close to the tenant side may provide an on-site service for the tenant. The following briefly describes the cloud management platform, the cloud infrastructure, and the edge nodes.

The cloud management platform may perform overall management on the cloud infrastructure and the plurality of edge nodes in the system, and may be open to tenants outside the system, and respond to their requests. For example, the cloud management platform may provide various interfaces such as a login interface, a resource pool deployment interface, an application deployment interface, and a data processing interface, for access of a client (for example, a terminal device used by the tenant or a browser on the terminal device used by the tenant) of the tenant. The cloud management platform may perform identity authentication on the client of the tenant through the login interface (for example, account and password input fields on a login page), and the client of the tenant may be allowed to log in to the cloud management platform after the authentication succeeds. The cloud management platform may further allow, through the resource pool deployment interface (for example, a computing power information input field on a computing power pool construction page), the client of the tenant to upload a resource pool deployment request (where the request may indicate resource information required by the tenant) to the cloud management platform, so that the cloud management platform is connected to several edge nodes based on the request. Therefore, the several edge nodes may form an edge node resource pool (which may also be referred to as an edge node computing power pool). The cloud management platform may further allow, through the application deployment interface (for example, a deployment list input field on a service deployment page), the client of the tenant to upload an application deployment request (which may also be referred to as a deployment list, where the list may indicate a plurality of applications and configurations that need to be installed and used by the tenant) to the cloud management platform. Therefore, the cloud management platform may separately deploy, based on the request, the plurality of applications on several edge nodes forming a resource pool. The cloud management platform may further allow, through the data processing interface (for example, a communication interface or a data processing request input field on a service processing page), the client of the tenant to send a data processing request (where the request may indicate data that needs to be processed by the tenant) to the cloud management platform. Therefore, the cloud management platform may deliver the data processing request to a resource pool, so that several edge nodes forming the resource pool process corresponding data based on the request.

The cloud infrastructure is a hardware device used by the public cloud system to provide various cloud services. The cloud infrastructure may include a plurality of data centers (data centers, DCs) deployed in different geographical areas. Each data center includes a plurality of physical servers, and each server may be configured to support various cloud services, such as a virtual machine (virtual machine, VM), a docker (docker), a bare metal server, and an elastic volume service. In addition, the cloud management platform is in a communication connection with a cloud infrastructure device. Therefore, the cloud management platform can provide various cloud services supported by the cloud infrastructure for the tenant to use.

The edge node can be connected to various on-site devices of the tenant downward and be connected to the cloud management platform upward. The edge node is typically presented as a hardware entity and may be considered as a data processing unit with computing resources, storage resources, and network resources. Due to different service focuses, the edge node usually has a plurality of product forms. (1) The edge node may be an edge gateway responsible for processing and converting a network protocol. (2) The edge node may alternatively be an edge server responsible for a closed-loop control service. (3) The edge node may alternatively be an edge cloud responsible for large-scale data processing, where the edge cloud may be a physical server close to a site (the tenant side), or may be a virtual machine (virtual machine, VM) and a docker (docker) on the physical server close to the site, or the like. (4) The edge node may alternatively be an edge device responsible for medium-scale and small-scale data processing, for example, an industrial computer close to a site. In these cases, the on-site device that accesses the edge node may be a personal computer, a notebook computer, a smartphone, a smartwatch, a smart band sensor, an electric meter, a water meter, a gas meter, a controller (for example, a programmable logic controller (programmable logic controller, PLC)), an upper computer, a control system, a database, and the like that are used by the tenant on site.

When the tenant needs to process a service, in the plurality of edge nodes in the edge node deployment system, the cloud management platform may implement network interworking between several edge nodes, so that the several edge nodes form a resource pool used to complete the service. Then, the cloud management platform may separately deploy, on the several edge nodes forming the resource pool, a plurality of applications used to complete the service specified by the tenant, so that all the several edge nodes have a specific data processing function. Then, the cloud management platform may control the several edge nodes to run the plurality of applications, to obtain data (where the data may be collected using an on-site device) and process the data, to obtain processed data. It can be learned that, the service specified by the tenant is divided into a plurality of subservices by the cloud management platform, and each edge node in the resource pool may be responsible for one subservice of the service. Therefore, the several edge nodes forming the resource pool may jointly complete the service specified by the tenant, to meet a service requirement of the tenant.

Further, for any edge node in the resource pool, when running several applications deployed on the edge node, the edge node finds that the edge node is overloaded, and may reserve a part of applications in the several applications, and migrate the other part of applications in the several applications to another edge node in the resource pool. In this way, the part of applications in the several applications are still run by the edge node, and the other part of applications in the several applications are run by another edge node. Therefore, service transfer can be implemented. It can be learned that, when the edge node executes a subservice that the edge node is responsible for, if the edge node finds that the edge node cannot bear the subservice that the edge node is responsible for, the edge node may negotiate with another edge node in real time, and transfer a part of the subservice that the edge node is responsible for to the another edge node, to narrow the subservice that the edge node is responsible for, expand a subservice that the another edge node is responsible for, and complete service adjustment in time.

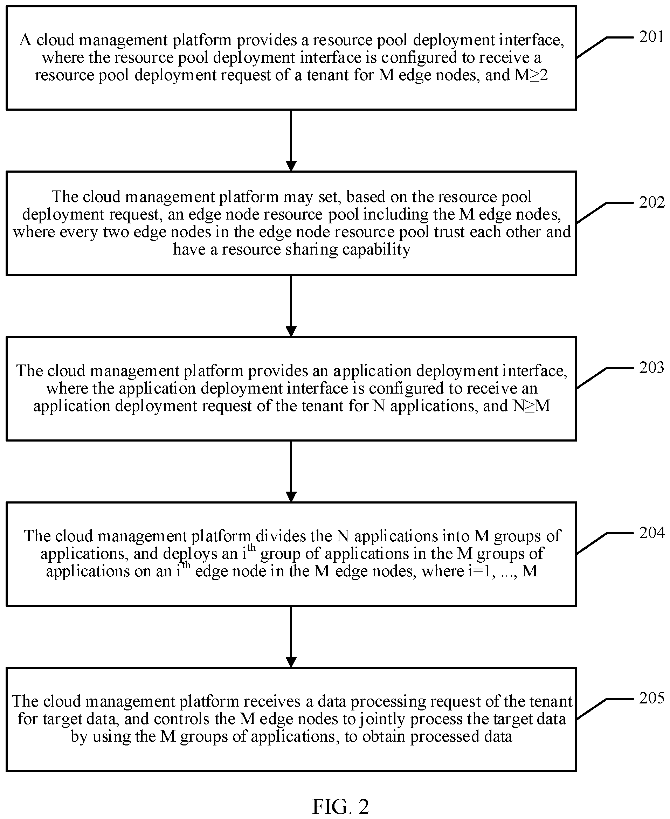

To further understand a working procedure of the foregoing edge node deployment system, the following further describes the working procedure with reference to FIG. 2. FIG. 2 is a schematic flowchart of an edge node deployment method based on a cloud computing technology according to an embodiment of this application. The method may be applied to the edge node deployment system shown in FIG. 1. As shown in FIG. 2, the method includes the following steps.

201: A cloud management platform provides a resource pool deployment interface, where the resource pool deployment interface is configured to receive a resource pool deployment request of a tenant for M edge nodes, and M≥2.

In this embodiment, when the tenant needs to process a service, the cloud management platform may provide the resource pool deployment interface (for example, a computing power information input field on a computing power pool construction page) for a client used by the tenant. Therefore, the tenant may send the resource pool deployment request for the M edge nodes

(where M is a positive integer greater than or equal to 2) to the resource pool deployment interface via the client, so that the cloud management platform receives, through the resource pool deployment interface, the resource pool deployment request (which may also be referred to as a computing power pool deployment request) sent by the client. After receiving the resource pool deployment request, the cloud management platform may determine, based on the request, that the M edge nodes need to be connected, to construct a resource pool (which may also be referred to as a computing power pool) used to complete the service of the tenant.

It should be noted that the resource pool deployment request may include resource information (which may also be referred to as computing power information) required by the tenant, and the resource information may be presented in a plurality of forms: (1) The resource information may be a resource required by the tenant, the resource is used to process a service specified by the tenant, and the resource usually includes at least one of a computing resource, a storage resource, and a network resource. In this case, after receiving the resource pool deployment request, the cloud management platform may parse the request and determine the resource required by the tenant, to allocate, to the tenant, the M edge nodes used to construct the resource pool. An available resource of the M edge nodes is greater than or equal to the resource required by the tenant. (2) The resource information may be the M edge nodes selected by the tenant. In this case, after receiving the resource pool deployment request, the cloud management platform may parse the request and determine the M edge nodes that are specified by the tenant and that are used to construct the resource pool.

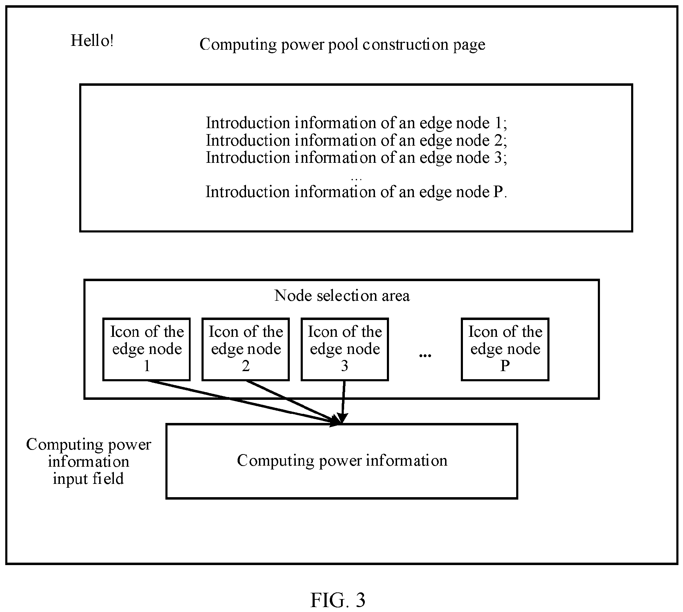

To further understand the resource pool deployment interface provided by the cloud management platform, the following further describes the resource pool deployment interface with reference to a specific example. For example, as shown in FIG. 3 (FIG. 3 is a diagram of a resource pool deployment interface according to an embodiment of this application), the cloud management platform may provide a computing power pool construction page for the client used by the tenant (for example, a browser used by the tenant). The computing power pool construction page displays introduction information of an edge node 1, introduction information of an edge node 2, ..., and introduction information of an edge node P (where P is a positive integer greater than or equal to 2). The introduction information helps the tenant understand a size of an available resource of each edge node. The computing power pool construction page further includes a node selection area and a computing power information input field. The node selection area includes an icon of the edge node 1, an icon of the edge node 2, ..., and an icon of the edge node P. These icons may be provided for the tenant to select and drag. The computing power pool construction page may be displayed by the client for the tenant to view and operate. Therefore, the tenant may drag the icon of the edge node 1, the icon of the edge node 2, and the icon of the edge node 3 in the node selection area to the computing power information input field via the client. The three icons may be used to automatically generate computing power information in the computing power information input field. The computing power information indicates that the tenant selects the edge node 1, the edge node 2, and the edge node 3. In this case, the tenant successfully inputs the computing power information in the computing power information input field via the client, so that the computing power information (in a form of the computing power pool deployment request) is received by the cloud management platform. Therefore, the cloud management platform may determine that the edge node 1, the edge node 2, and the edge node 3 need to be connected, to construct the computing power pool.

Certainly, the tenant may alternatively directly input computing power information in the computing power information input field via the client. The computing power information may indicate resources such as a central processing unit (central processing unit, CPU), a graphics processing unit (graphics processing unit, GPU), a memory, a hard disk drive, and a communication speed that are required by the tenant. In this case, after successfully receiving the computing power information, the cloud management platform may determine a resource requirement of the tenant based on the computing power information, and select the edge node 1, the edge node 2, and the edge node 3 from the P edge nodes. Resources such as CPUs, GPUs, memories, hard disk drives, and communication speeds of the three edge nodes can meet the resource requirement of the tenant. Therefore, the cloud management platform may determine that the edge node 1, the edge node 2, and the edge node 3 need to be connected, to construct the computing power pool.

It should be understood that, before the tenant sends the resource pool deployment request, the cloud management platform may provide a login interface (for example, an account input field and a password input field on a login page) for the client used by the tenant, and the tenant may input a tenant account and a tenant password (an account and a password that have been registered on the cloud management platform) to the login interface via the client. Therefore, the cloud management platform may perform identity authentication on the information, and after the authentication succeeds, the client of the tenant may be allowed to log in to the cloud management platform.

202: The cloud management platform may set, based on the resource pool deployment request, an edge node resource pool including the M edge nodes, where every two edge nodes in the edge node resource pool trust each other and have a resource sharing capability.

After determining, based on the resource pool deployment request, that the M edge nodes need to be connected, the cloud management platform may enable the M edge nodes to complete a communication connection, so that the M edge nodes form the resource pool. The resource pool is specially used to complete the service specified by the tenant. Any two edge nodes in the resource pool trust each other and have the resource sharing capability.

It should be noted that the M edge nodes may have a specific connection sequence: (1) The cloud management platform may sort the M edge nodes based on sizes of available resources, and then enable a 1^{st} edge node (an edge node with a largest available resource in the M edge nodes) to complete a communication connection with a 2^{nd} edge node (an edge node with a second largest available resource in the M edge nodes), enable the 2^{nd} edge node to complete a communication connection with a 3^{rd} edge node, ..., and enable an (M-1)^{th} edge node (an edge node with a second smallest available resource in the M edge nodes) to complete a communication connection with an M^{th} edge node (an edge node with a smallest available resource in the M edge nodes). (2) The cloud management platform may alternatively enable any two of the M edge nodes to complete a communication connection, and so on.

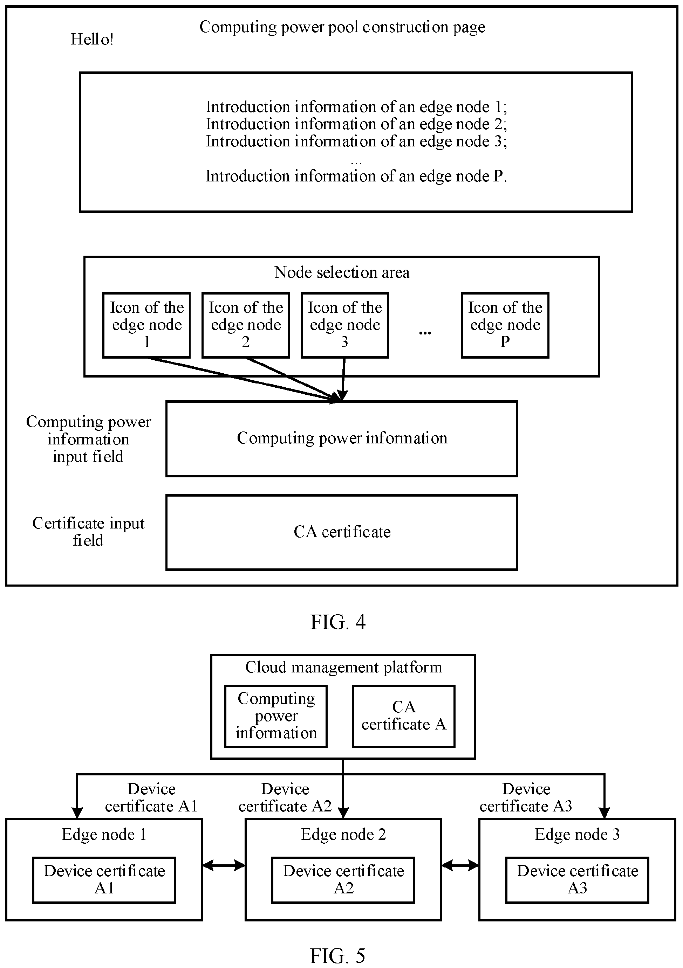

Specifically, the cloud management platform may enable the M edge nodes to complete the communication connection in the following manner.
(1) The resource pool deployment request includes not only the resource information required by the tenant, but also a CA certificate provided by the tenant. As shown in FIG. 4 (FIG. 4, which is based on FIG. 3, is another diagram of a resource pool deployment interface according to an embodiment of this application), the computing power pool construction page further includes a certificate input field. After inputting the computing power information in the computing power information input field via the client, the tenant may further provide the CA certificate of the tenant to the certificate input field via the client, so that the computing power information and the CA certificate (in a form of the computing power pool deployment request) are received by the cloud management platform.
(2) After receiving the resource pool deployment request, the cloud management platform may parse the request to obtain the resource information required by the tenant and the CA certificate provided by the tenant. In this case, after determining, based on the resource information, that the M edge nodes need to be connected, the cloud management platform may generate, based on the CA certificate provided by the tenant, M device certificates (that is, the foregoing M certificates) forming a certificate chain. Then, the cloud management platform may deliver an i^{th} device certificate in the M device certificates to an i^{th} edge node in the M edge nodes, to be specific, deliver a 1^{st} device certificate to the 1^{st} edge node, deliver a 2^{nd} device certificate to the 2^{nd} edge node, ..., and deliver an M^{th} device certificate to the M^{th} edge node. Therefore, the cloud management platform may successfully issue the M device certificates to the M edge nodes. Because the M device certificates are in a same certificate chain, in other words, the M device certificates are mutually authorized and mutually trusted, the M edge nodes may perform mutual authentication based on the M device certificates and the foregoing connection sequence. After the authentication is completed, it is determined that the other party is trustworthy, to complete the communication connection. In this way, the M edge nodes form the resource pool, and the i^{th} device certificate in the M device certificates used as an identity card of the i^{th} edge node in the M edge nodes in the resource pool indicates that the i^{th} edge node is trustworthy in the resource pool. Therefore, other edge nodes in the M edge nodes may share resources with the i^{th} edge node. For example, as shown in FIG. 5 (FIG. 5, which is based on FIG. 4, is a diagram of another structure of an edge node deployment system according to an embodiment of this application), after receiving the computing power information required by the tenant and a CA certificate A provided by the tenant, the cloud management platform may determine that the edge node 1, the edge node 2, and the edge node 3 need to be connected. In this case, the cloud management platform may generate, based on the CA certificate A, a device certificate A1, a device certificate A2, and a device certificate A3 that form the certificate chain (in other words, the three device certificates are mutually authorized, and the three device certificates may form the certificate chain: the device certificate A1-the device certificate A2-the device certificate A3). Then, the cloud management platform may issue the device certificate A1 to the edge node 1, issue the device certificate A2 to the edge node 2, and issue the device certificate A3 to the edge node 3. In this case, identity authentication may be completed between the edge node 1 and the edge node 2 by using the device certificate A1 and the device certificate A2. Therefore, the edge node 1 and the edge node 2 complete a communication connection. In this case, the edge node 1 and the edge node 2 trust each other and can implement resource sharing. Similarly, identity authentication may be completed between the edge node 2 and the edge node 3 by using the device certificate A2 and the device certificate A3. Therefore, the edge node 2 and the edge node 3 complete a communication connection. In this case, the edge node 2 and the edge node 3 trust each other and can implement the resource sharing.

203: The cloud management platform provides an application deployment interface, where the application deployment interface is configured to receive an application deployment request of the tenant for N applications, and N≥M.

After the M edge nodes are connected, the cloud management platform may further provide the application deployment interface (for example, a deployment list input field in a service deployment page) for the client of the tenant. After the tenant determines the N applications that can meet a service requirement of the tenant, the tenant may send, via the client, the application deployment request for the N applications to the application deployment interface (where N is greater than or equal to M), so that the cloud management platform receives, through the application deployment interface, the application deployment request sent by the client. After receiving the application deployment request, the cloud management platform may determine, based on the request, that the N applications need to be deployed on the M edge nodes.

It should be noted that the application deployment request may also be referred to as a deployment list, and the application deployment request may include installation packages of the N applications provided by the tenant. In this case, after receiving the application deployment request, the cloud management platform may parse the request to obtain the installation packages of the N applications, and then install the N applications on the M edge nodes based on the installation packages of the N applications.

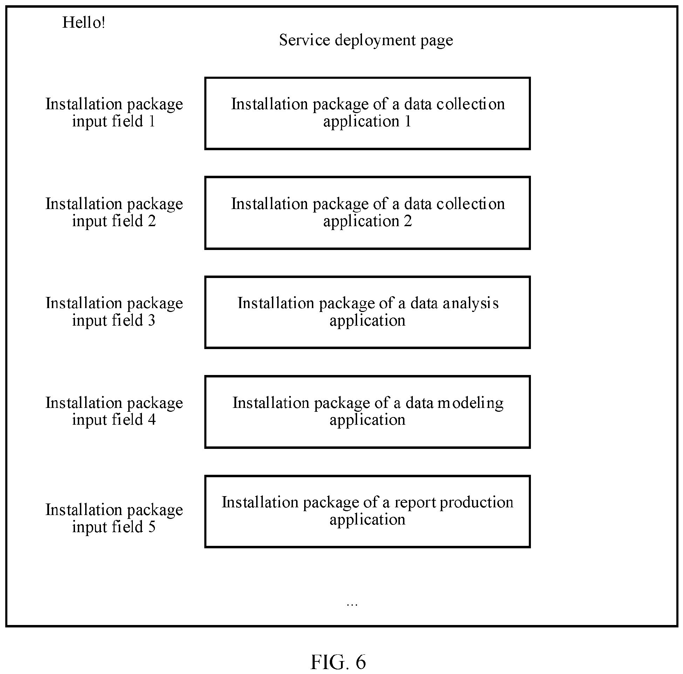

To further understand the application deployment interface provided by the cloud management platform, the following further describes the application deployment interface with reference to a specific example. For example, as shown in FIG. 6 (FIG. 6, which is based on FIG. 5, is a diagram of an application deployment interface according to an embodiment of this application), the cloud management platform may provide the service deployment page for the client used by the tenant (for example, a browser used by the tenant). The service deployment page includes the deployment list input field, and the deployment list input field includes a plurality of installation package input fields. The service deployment page may be displayed by the client for the tenant to view and operate. It is assumed that the service that needs to be processed by the tenant is modeling by using data and report production. The tenant may first select a data collection application 1, a data collection application 2, a data analysis application, a data modeling application, and a report production application, and then respectively input, via the client, an installation package of the data collection application 1 in an installation package input field 1, an installation package of the data collection application 2 in an installation package input field 2, an installation package of the data analysis application in an installation package input field 3, an installation package of the data modeling application in an installation package input field 4, and an installation package of the report production application in an installation package input field 5, so that the installation packages (in a form of the application deployment request) of the five applications are received by the cloud management platform, and therefore the cloud management platform may determine that the five applications need to be deployed.

204: The cloud management platform divides the N applications into M groups of applications, and deploys an i^{th} group of applications in the M groups of applications on the i^{th} edge node in the M edge nodes, where i=1, ..., M.

After determining that the N applications are required, the cloud management platform may divide the N applications into the M groups of applications, and install the i^{th} group of applications on the i^{th} edge node in the M edge nodes, to be specific, install a 1^{st} group of applications on the 1^{st} edge node, install a 2^{nd} group of applications on the 2^{nd} edge node, ..., and install an M^{th} group of applications on the M^{th} edge node. In this way, the cloud management platform can successfully deploy the M groups of applications on the M edge nodes.

Specifically, the cloud management platform may divide the applications and deploy the applications in the following manner.
(1) In the M edge nodes, the cloud management platform may obtain an available resource of the i^{th} edge node, to be specific, obtain an available resource of the 1^{st} edge node, an available resource of the 2^{nd} edge node, ..., and an available resource of the M^{th} edge node.
(2) In the N applications, the cloud management platform may determine at least one application that matches the available resource of the i^{th} edge node as the i^{th} group of applications in the M groups of applications, to be specific, determine one or more applications that match the available resource of the 1^{st} edge node as the 1^{st} group of applications, determine one or more applications that match the available resource of the 2^{nd} edge node as the 2^{nd} group of applications..., and determine one or more applications that match the available resource of the M^{th} edge node as the M^{th} group of applications. In this way, the cloud management platform can successfully divide the N applications into the M groups of applications, and this is equivalent to dividing the service that needs to be processed by the tenant into M subservices.
(3) The cloud management platform installs the i^{th} group of applications on the i^{th} edge node in the M edge nodes based on an installation package of the i^{th} group of applications, where the i^{th} edge node is responsible for an i^{th} subservice. To be specific, the cloud management platform installs the 1^{st} group of applications on the 1^{st} edge node based on an installation package of the 1^{st} group of applications (where the 1^{st} edge node is responsible for a 1^{st} subservice), installs the 2^{nd} group of applications on the 2^{nd} edge node based on an installation package of the 2^{nd} group of applications (where the 2^{nd} edge node is responsible for a 2^{nd} subservice), ..., and installs the M^{th} group of applications on the M^{th} edge node based on an installation package of the M^{th} group of applications (where the M^{th} edge node is responsible for an M^{th} subservice). In this way, the cloud management platform can correspondingly deploy the M groups of applications on the M edge nodes successfully, and the M edge nodes may be cooperatively responsible for the service that needs to be processed by the tenant.

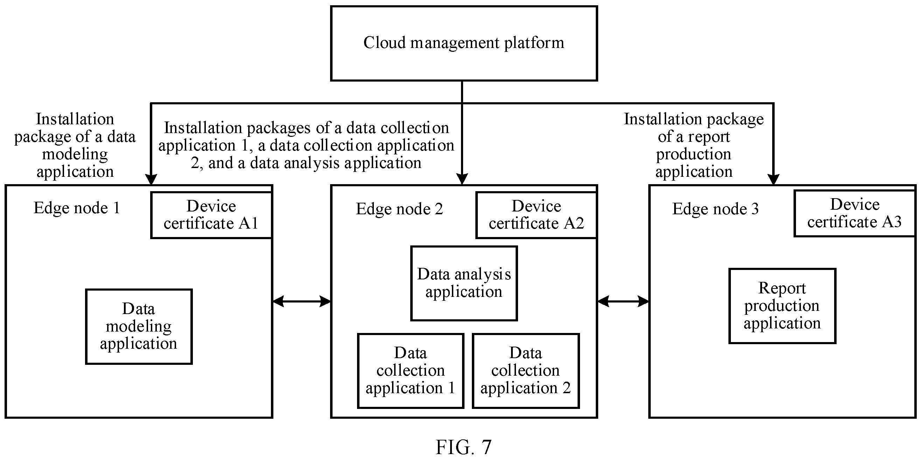

As shown in FIG. 7 (FIG. 7, which is based on FIG. 6, is a diagram of another structure of an edge node deployment system according to an embodiment of this application), because storage space of the edge node 1 is very large and is suitable for running the data modeling application to implement data modeling, a CPU of the edge node 2 has a high configuration and a large memory and is suitable for running the data collection application and the data analysis application to implement data collection and data analysis, and a GPU of the edge node 3 has a high configuration and is suitable for running the report production application to display a final report, the cloud management platform can divide the five applications into three groups. A 1^{8t} group of applications includes the data modeling application, a 2^{nd} group of applications includes the data collection application 1, the data collection application 2, and the data analysis application, and a 3^{rd} group of applications includes the report production application. In other words, the service of the tenant is divided into three subservices. A subservice 1 is used for modeling based on a data analysis result, a subservice 2 is used for data collection and data analysis, and a subservice 3 is used for report production based on a data analysis structure.

After application grouping is completed, the cloud management platform may deliver the installation package of the data modeling application to the edge node 1 for the edge node 1 to install the data modeling application; deliver the installation packages of the data collection application 1, the data collection application 2, and the data analysis application to the edge node 2 for the edge node 2 to install the data collection application 1, the data collection application 2, and the data analysis application; and deliver the installation package of the report production application to the edge node 3 for the edge node 3 to install the report production application. In this way, the edge node 1 may be responsible for the subservice 1, the edge node 2 may be responsible for the subservice 2, and the edge node 3 may be responsible for the subservice 3.

It should be understood that, during actual application, step 203 and step 204 are optional, that is, the two steps may not be performed. In this case, the N applications have been divided into the M groups of applications in advance, and the i^{th} group of applications in the M groups of applications may be preset on the i^{th} edge node in the M edge nodes. The presetting herein means that when the tenant uploads the resource pool deployment request, the tenant directly selects the M edge nodes on which the M groups of applications have been deployed in advance (where the M groups of applications are in one-to-one correspondence with the M edge nodes), and sends the resource pool deployment request for the M edge nodes to the cloud management platform. In this way, after the cloud management platform constructs, based on the request, the resource pool including the M edge nodes, because the M groups of applications have been deployed on the M edge nodes in advance, the tenant does not need to upload the application deployment request for the N applications, and the cloud management platform does not need to perform operations such as division and deployment on the N applications.

205: The cloud management platform receives a data processing request of the tenant for target data, and controls the M edge nodes to jointly process the target data by using the M groups of applications, to obtain processed data.

After the M groups of applications are deployed on the M edge nodes, the cloud management platform may receive the data processing request that is for the target data and that is sent by the client of the tenant. Therefore, the cloud management platform may control, based on the request, the M edge nodes to run the M groups of applications to jointly process the target data, to obtain the processed data. To be specific, the cloud management platform may deliver an instruction to the 1^{st} edge node, and the 1^{st} edge node may run the 1^{st} group of applications based on the instruction, to obtain and process the target data, obtain data through a 1^{st} time of processing, and send the data to the 2^{nd} edge node. The 2^{nd} edge node may run the 2^{nd} group of applications, to process the data obtained through the 1^{st} time of processing, obtain data through a 2^{nd} time of processing, and send the data to the 3^{rd} edge node; ...; and the M^{th} edge node may run the M^{th} group of applications, to process data obtained through an (M-1)^{th} time of processing, and obtain data through an M^{th} time of processing, where the data may be used as the foregoing processed data. In this case, the M edge nodes jointly complete the service specified by the tenant.

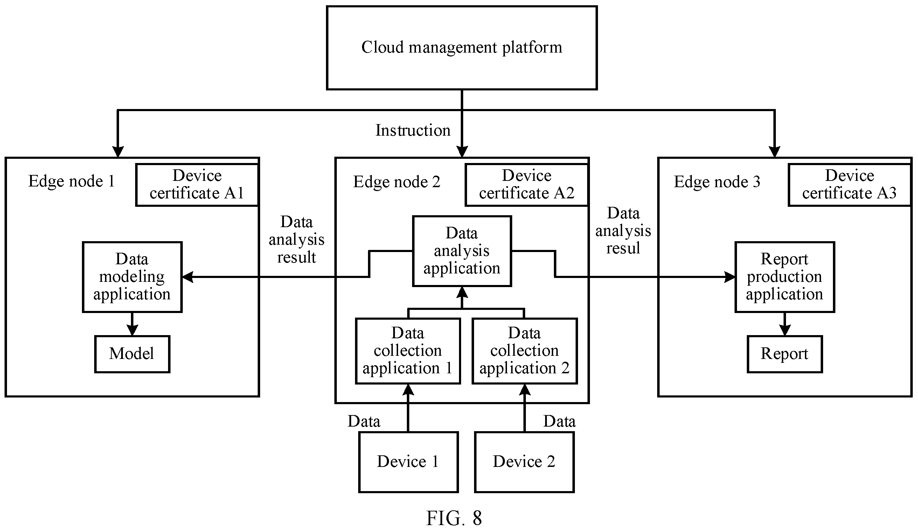

For example, as shown in FIG. 8 (FIG. 8, which is based on FIG. 7, is a diagram of another structure of an edge node deployment system according to an embodiment of this application), the cloud management platform may deliver an instruction to the edge node 2. The edge node 2 may run the data collection application 1 and the data collection application 2 based on the instruction, to drive a device 1 and a device 2 to collect data, run the data analysis application to analyze the collected data to obtain a data analysis result, and separately send the data analysis result to the edge node 1 and the edge node 3. In this case, the edge node 1 may run the data modeling application, to perform modeling based on the data analysis result, to obtain and output a corresponding model. The edge node 3 may run the report production application, to produce a report based on the data analysis result, to obtain and output a corresponding report. The model and the report may be provided for the tenant to view and use. Therefore, the three edge nodes jointly complete the service of the tenant.

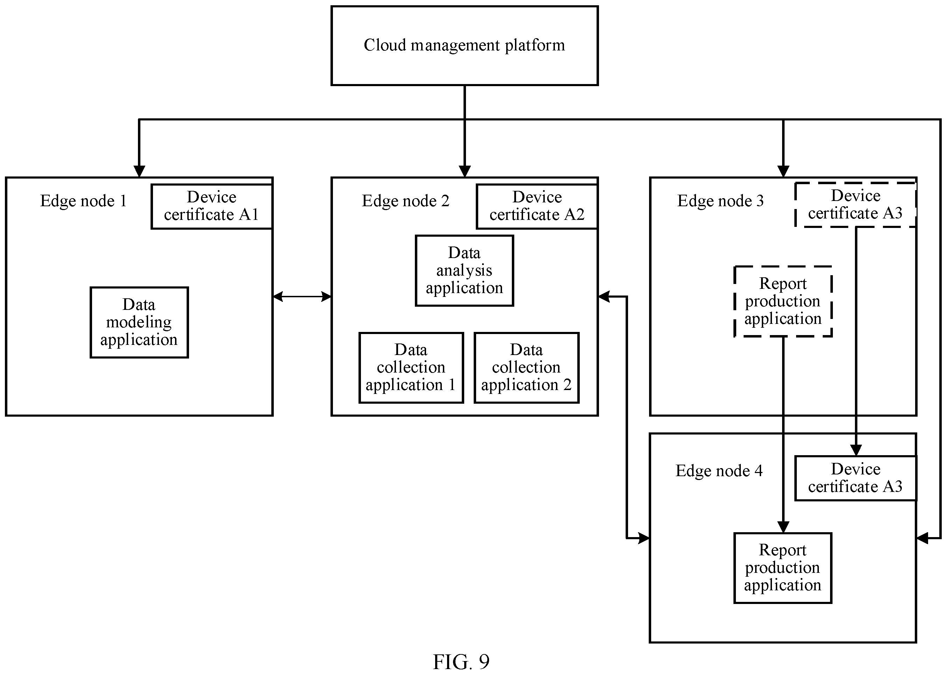

Further, in the M edge nodes, if the i^{th} edge node is faulty, the cloud management platform migrates the i^{th} device certificate and the i^{th} group of applications from the i^{th} edge node to a target edge node (where the target edge node usually has a specific available resource) other than the M edge nodes, and replaces the original i^{th} edge node with the target edge node, so that the target edge node is used as a new i^{th} edge node in the M edge nodes. In this way, the new i^{th} edge node and the original i^{th} edge node are responsible for the same service. Therefore, M updated edge nodes may also jointly complete the service of the tenant. For example, as shown in FIG. 9 (FIG. 9, which is based on FIG. 8, is a diagram of another structure of an edge node deployment system according to an embodiment of this application), if the cloud management platform finds that hardware of the edge node 3 is damaged, the device certificate A3 and the report production application may be migrated to the edge node 4, and the edge node 4 replaces the edge node 3. Therefore, the edge node 1, the edge node 2, and the edge node 4 form a new computing power pool, to complete the service of the tenant.

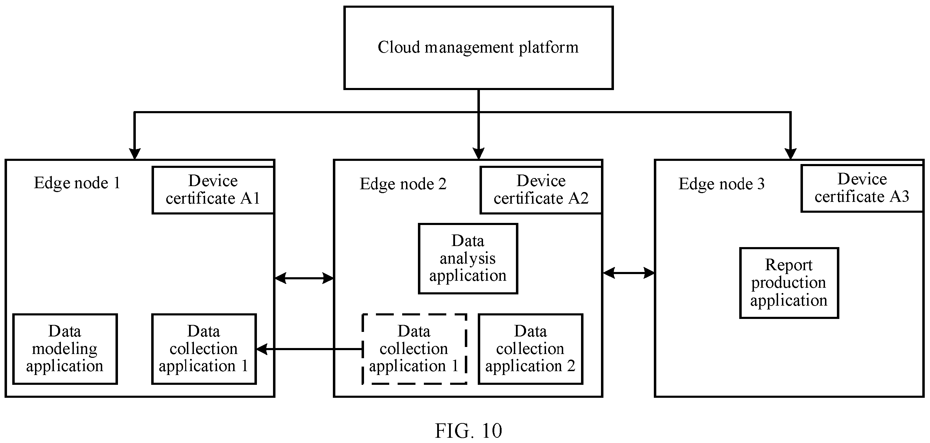

Further, the cloud management platform may set an application scheduling mechanism on the M edge nodes. Based on this mechanism, the i^{th} edge node may detect whether a resource required for running the i^{th} group of applications is greater than a preset resource threshold (where a value of the threshold may be set based on an actual requirement, and is not limited herein). If the i^{th} edge node determines that the resource required for running the i^{th} group of applications is greater than the preset resource threshold, the i^{th} edge node may first select the j^{th} edge node, and migrate a part of applications included in the i^{th} group of applications to the j^{th} edge node (where j=1, ..., M, and j≠i) in the M edge nodes. In this way, the i^{th} edge node may automatically adjust services that the i^{th} edge node is to be responsible for, and complete service transfer, that is, the i^{th} edge node may reduce load of the i^{th} subservice that the i^{th} edge node is responsible for, and increase load of a j^{th} subservice that the j^{th} edge node is responsible for. For example, as shown in FIG. 10 (FIG. 10, which is based on FIG. 8, is a diagram of another structure of an edge node deployment system according to an embodiment of this application), if the edge node 2 finds that a CPU resource occupied by running the data collection application 1, the data collection application 2, and the data analysis application is greater than 80%, the edge node 2 may select the edge node 1, and migrate the data collection application 1 to the edge node 1 for installation. In this case, the edge node 1 subsequently runs the data collection application 1 to collect corresponding data, and other applications are still run by an original edge node.

Further, the i^{th} edge node may select the j^{th} edge node in the following manners. (1) The i^{th} edge node may determine any one of edge nodes other than the i^{th} edge node in the M edge nodes as the j^{th} edge node. (2) The i^{th} edge node may determine an edge node with a largest available resource in edge nodes other than the i^{th} edge node in the M edge nodes as the j^{th} edge node. (3) The i^{th} edge node may determine an edge node other than the i^{th} edge node in the M edge nodes as the j^{th} edge nod; or the like.

In embodiments of this application, the cloud management platform may first obtain, through the interface, the resource pool deployment request that is input by the tenant and that is for the M edge nodes, where the i^{th} group of applications in the M groups of applications is deployed on the i^{th} edge node in the M edge nodes, and the M groups of applications are obtained by dividing the N applications. Then, the cloud management platform may create, based on the resource pool deployment request, the edge node resource pool including the M edge nodes, where every two edge nodes in the edge node resource pool trust each other and have the resource sharing capability. In the foregoing process, the cloud management platform may construct, for the tenant, the edge node resource pool including the M edge nodes. In the resource pool, the M edge nodes trust each other and can implement resource sharing. In addition, the N applications used to complete the service that needs to be processed by the tenant are deployed on the M edge nodes. In other words, the M edge nodes may be jointly responsible for and complete the service that needs to be processed by the tenant. It can be learned that, regardless of a value of N, the M edge nodes forming the edge node resource pool may implement the resource sharing, and support running of the N applications as a whole, to jointly complete the service that needs to be processed by the tenant, and therefore, the service requirement of the tenant can be met.

Further, in the M edge nodes in the edge node resource pool, the i^{th} subservice that the i^{th} edge node is responsible for may be allocated by the cloud management platform, and this may reduce some labor costs. In addition, after the i^{th} edge node is specified with the i^{th} subservice, if the i^{th} edge node cannot bear the i^{th} subservice (for example, the i^{th} edge node finds that a resource required for running an application is excessively large, and the edge node is overloaded), the i^{th} edge node may automatically adjust the i^{th} subservice that the i^{th} edge node is responsible for, to implement service transfer, and further reduce labor costs.

Further, if the tenant has a digital transformation requirement, the tenant does not need to newly purchase a batch of hardware as new edge nodes. The tenant may select the M edge nodes from a plurality of existing edge nodes on site, and implement network interworking between the M edge nodes to form the edge node resource pool, to provide robust computing power for the tenant, effectively use existing devices on site, and reduce device costs to some extent. In addition, when the i^{th} edge node in the resource pool is faulty, only the i^{th} device certificate and the i^{th} group of applications need to be migrated from the i^{th} edge node to another edge node outside the resource pool on a tenant site, and the node is used as the new i^{th} edge node in the resource pool, so that existing hardware devices on the tenant site can be further used, to further reduce the device costs.

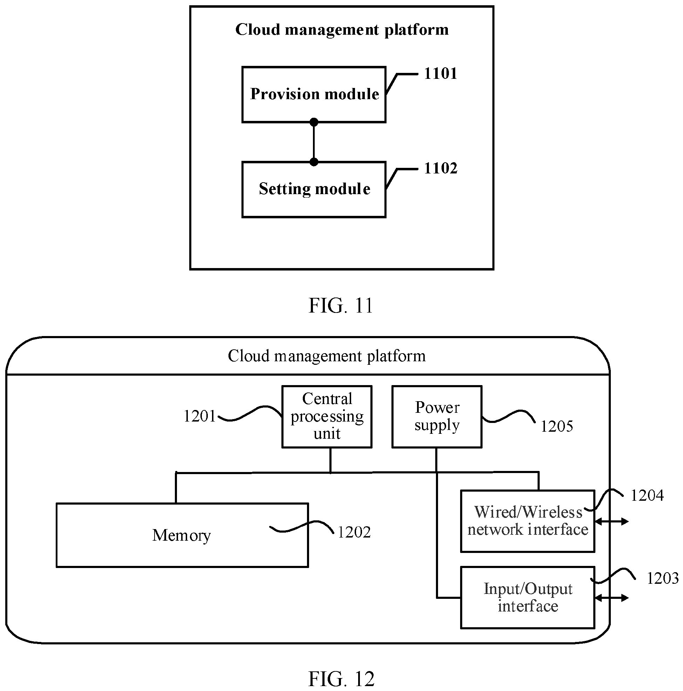

The foregoing describes in detail the edge node deployment method based on the cloud computing technology provided in embodiments of this application. The following describes a cloud management platform provided in embodiments of this application. FIG. 11 is a diagram of a structure of a cloud management platform according to an embodiment of this application. As shown in FIG. 11, the cloud management platform manages an infrastructure that provides a cloud service, the cloud management platform is connected to M on-premises edge nodes, and the cloud management platform includes:
a provision module 1101, configured to provide an interface, where the interface is configured to obtain a resource pool deployment request that is input by a tenant and that is for the M edge nodes, where an i^{th} group of applications in M groups of applications is deployed on an i^{th} edge node in the M edge nodes, M≥2, M≥i≥1, the M groups of applications are obtained by dividing N applications, and N≥M, for example, the provision module 1101 may implement step 201 in the embodiment shown in FIG. 2; and
a setting module 1102, configured to set, based on the resource pool deployment request, an edge node resource pool including the M edge nodes, where every two edge nodes in the edge node resource pool trust each other and have a resource sharing capability, for example, the setting module 1102 may implement step 202 in the embodiment shown in FIG. 2.

In embodiments of this application, the cloud management platform may first obtain, through the interface, the resource pool deployment request that is input by the tenant and that is for the M edge nodes, where the i^{th} group of applications in the M groups of applications is deployed on the i^{th} edge node in the M edge nodes, and the M groups of applications are obtained by dividing the N applications. Then, the cloud management platform may create, based on the resource pool deployment request, the edge node resource pool including the M edge nodes, where every two edge nodes in the edge node resource pool trust each other and have the resource sharing capability. In the foregoing process, the cloud management platform may construct, for the tenant, the edge node resource pool including the M edge nodes. In the resource pool, the M edge nodes trust each other and can implement resource sharing. In addition, the N applications used to complete a service that needs to be processed by the tenant are deployed on the M edge nodes. In other words, the M edge nodes may be jointly responsible for and complete the service that needs to be processed by the tenant. It can be learned that, regardless of a value of N, the M edge nodes forming the edge node resource pool may implement the resource sharing, and support running of the N applications as a whole, to jointly complete the service that needs to be processed by the tenant, and therefore, a service requirement of the tenant can be met.

In a possible implementation, the setting module 1102 is configured to generate a certificate chain based on a CA certificate, where the certificate chain includes M certificates, and send an i^{th} certificate in the M certificates to the i^{th} edge node in the M edge nodes, where the i^{th} certificate indicates that the i^{th} edge node is trustworthy in the edge node resource pool.

In a possible implementation, the cloud management platform further includes a migration module, configured to: if the i^{th} edge node is faulty, migrate the i^{th} certificate and the i^{th} group of applications from the i^{th} edge node to a target edge node other than the M edge nodes, and use the target edge node as a new i^{th} edge node in the M edge nodes.

In a possible implementation, the cloud management platform further includes: An application scheduling mechanism is specified on the i^{th} edge node, to enable the i^{th} edge node to migrate a part of applications included in the i^{th} group of applications to a j^{th} edge node if the i^{th} edge node determines that a resource required for running the i^{th} group of applications is greater than a preset resource threshold, where j=1, ..., M, and j≠i.

In a possible implementation, the j^{th} edge node is any one of edge nodes other than the i^{th} edge node in the M edge nodes, or the j^{th} edge node is an edge node other than the i^{th} edge node in the M edge nodes.

In a possible implementation, the resource includes at least one of the following: a computing resource, a storage resource, and a network resource.

It should be noted that, content such as information exchange between the modules/units of the apparatuses and an implementation process is based on the same concept as the method embodiment of this application, and produces the same technical effects as those of the method embodiment of this application. For specific content, refer to the foregoing descriptions in the method embodiment of embodiments of this application. Details are not described herein again.

FIG. 12 is a diagram of another structure of a cloud management platform according to an embodiment of this application. As shown in FIG. 12, an embodiment of the cloud management platform may include one or more central processing units 1201, a memory 1202, an input/output interface 1203, a wired/wireless network interface 1204, and a power supply 1205.

The memory 1202 may be used for temporary storage or permanent storage. Further, the central processing unit 1201 may be configured to communicate with the memory 1202, and perform, on the cloud management platform, operations of a series of instructions in the memory 1202.

In this embodiment, the central processing unit 1201 may perform the method steps performed by the cloud management platform in the embodiment shown in FIG. 2. Details are not described herein again.

In this embodiment, specific functional module division in the central processing unit 1201 may be similar to division manners of the first provision module, the connection module, the second provision module, the deployment module, the processing module, the migration module, and the setting module described in FIG. 11. Details are not described herein again.

An embodiment of this application further relates to a computer storage medium. The computer-readable storage medium stores a program used for signal processing. When the program is run on a computer, the computer is enabled to perform the steps performed by the cloud management platform in the embodiment shown in FIG. 2.

An embodiment of this application further relates to a computer program product. The computer program product stores instructions, and when the instructions are executed by a computer, the computer is enabled to perform the steps performed by the cloud management platform in the embodiment shown in FIG. 2.

It may be clearly understood by a person skilled in the art that, for convenient and brief description, for detailed working processes of the foregoing systems, apparatuses, and units, refer to corresponding processes in the foregoing method embodiment. Details are not described herein again.

In the several embodiments provided in this application, it should be understood that the disclosed systems, apparatuses, and method may be implemented in another manner. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, may be located in one location, or may be distributed on a plurality of network units. Apart or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or a part of the technical solutions may be implemented in the form of a software product. The computer software product is stored in a storage medium and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

## Claims

1. An edge node deployment method based on a cloud computing technology, wherein the method is applied to a cloud management platform, the cloud management platform manages an infrastructure that provides a cloud service, the cloud management platform is connected to M on-premises edge nodes, and the method comprises:
Providing, by the cloud management platform, an interface, wherein the interface is configured to obtain a resource pool deployment request that is input by a tenant and that is for the M edge nodes, an i^{th} group of applications in M groups of applications is deployed on an i^{th} edge node in the M edge nodes, M≥2, M≥i≥1, the M groups of applications are obtained by dividing N applications, and N≥M; and
Setting, by the cloud management platform based on the resource pool deployment request, an edge node resource pool comprising the M edge nodes, wherein every two edge nodes in the edge node resource pool trust each other and have a resource sharing capability.

2. The method according to claim 1, wherein the setting, by the cloud management platform based on the resource pool deployment request, an edge node resource pool comprising the M edge nodes comprises:
generating, by the cloud management platform, a certificate chain based on a digital certification authority CA certificate, wherein the certificate chain comprises M certificates, and sending an i^{th} certificate in the M certificates to the i^{th} edge node in the M edge nodes, wherein the i^{th} certificate indicates that the i^{th} edge node is trustworthy in the edge node resource pool.

3. The method according to claim 1 or 2, wherein the method further comprises:
if the i^{th} edge node is faulty, migrating, by the cloud management platform, the i^{th} certificate and the i^{th} group of applications from the i^{th} edge node to a target edge node other than the M edge nodes, and using the target edge node as a new i^{th} edge node in the M edge nodes.

4. The method according to any one of claims 1 to 3, wherein the method further comprises:
setting, by the cloud management platform, an application scheduling mechanism on the i^{th} edge node, to enable the i^{th} edge node to migrate a part of applications comprised in the i^{th} group of applications to a j^{th} edge node if the i^{th} edge node determines that a resource required for running the i^{th} group of applications is greater than a preset resource threshold, wherein j=1, ..., M, and j≠i.

5. The method according to claim 4, wherein the j^{th} edge node is any one of edge nodes other than the i^{th} edge node in the M edge nodes, or the j^{th} edge node is an edge node other than the i^{th} edge node in the M edge nodes.

6. The method according to any one of claims 1 to 5, wherein the resource comprises at least one of the following: a computing resource, a storage resource, and a network resource.

7. A cloud management platform, wherein the cloud management platform manages an infrastructure that provides a cloud service, the cloud management platform is connected to M on-premises edge nodes, and the cloud management platform comprises:
a provision module, configured to provide an interface, wherein the interface is configured to obtain a resource pool deployment request that is input by a tenant and that is for the M edge nodes, wherein an i^{th} group of applications in M groups of applications is deployed on an i^{th} edge node in the M edge nodes, M≥2, M≥i≥1, the M groups of applications are obtained by dividing N applications, and N≥M; and
a setting module, configured to set, based on the resource pool deployment request, an edge node resource pool comprising the M edge nodes, wherein every two edge nodes in the edge node resource pool trust each other and have a resource sharing capability.

8. The cloud management platform according to claim 7, wherein the setting module is configured to generate a certificate chain based on a CA certificate, wherein the certificate chain comprises M certificates, and send an i^{th} certificate in the M certificates to the i^{th} edge node in the M edge nodes, wherein the i^{th} certificate indicates that the i^{th} edge node is trustworthy in the edge node resource pool.

9. The cloud management platform according to claim 7 or 8, wherein the cloud management platform further comprises:
a migration module, configured to: if the i^{th} edge node is faulty, migrate the i^{th} certificate and the i^{th} group of applications from the i^{th} edge node to a target edge node other than the M edge nodes, and use the target edge node as a new i^{th} edge node in the M edge nodes.

10. The cloud management platform according to any one of claims 7 to 9, wherein the cloud management platform further comprises:
setting an application scheduling mechanism on the i^{th} edge node, to enable the i^{th} edge node to migrate a part of applications comprised in the i^{th} group of applications to a j^{th} edge node if the i^{th} edge node determines that a resource required for running the i^{th} group of applications is greater than a preset resource threshold, wherein j=1, ..., M, and j≠i.

11. The cloud management platform according to claim 10, wherein the j^{th} edge node is any one of edge nodes other than the i^{th} edge node in the M edge nodes, or the j^{th} edge node is an edge node other than the i^{th} edge node in the M edge nodes.

12. The cloud management platform according to any one of claims 7 to 11, wherein the resource comprises at least one of the following: a computing resource, a storage resource, and a network resource.

13. An edge node deployment system, wherein the system comprises a cloud management platform, an infrastructure, and M edge nodes, the cloud management platform manages the infrastructure that provides a cloud service, and the cloud management platform is connected to the M on-premises edge nodes;
the cloud management platform is configured to provide an interface, wherein the interface is configured to obtain a resource pool deployment request that is input by a tenant and that is for the M edge nodes, an i^{th} group of applications in M groups of applications is deployed on an i^{th} edge node in the M edge nodes, M≥2, M≥i≥1, the M groups of applications are obtained by dividing N applications, and N≥M; and
the cloud management platform is configured to set, based on the resource pool deployment request, an edge node resource pool comprising the M edge nodes, wherein every two edge nodes in the edge node resource pool trust each other and have a resource sharing capability.

14. The system according to claim 13, wherein the cloud management platform is configured to generate a certificate chain based on a CA certificate, wherein the certificate chain comprises M certificates, and send an i^{th} certificate in the M certificates to the i^{th} edge node in the M edge nodes, wherein the i^{th} certificate indicates that the i^{th} edge node is trustworthy in the edge node resource pool.

15. The system according to claim 13 or 14, wherein the cloud management platform is further configured to: if the i^{th} edge node is faulty, migrate the i^{th} certificate and the i^{th} group of applications from the i^{th} edge node to a target edge node other than the M edge nodes, and use the target edge node as a new i^{th} edge node in the M edge nodes.

16. The system according to any one of claims 13 to 15, wherein the cloud management platform is further configured to set an application scheduling mechanism on the i^{th} edge node, to enable the i^{th} edge node to migrate a part of applications comprised in the i^{th} group of applications to a j^{th} edge node if the i^{th} edge node determines that a resource required for running the i^{th} group of applications is greater than a preset resource threshold, wherein j=1, ..., M, and j≠i.

17. The system according to claim 16, wherein the j^{th} edge node is any one of edge nodes other than the i^{th} edge node in the M edge nodes, or the j^{th} edge node is an edge node other than the i^{th} edge node in the M edge nodes.

18. The system according to any one of claims 13 to 17, wherein the resource comprises at least one of the following: a computing resource, a storage resource, and a network resource.

19. A cloud management platform, wherein the cloud management platform comprises a memory and a processor, wherein
the memory stores code, the processor is configured to execute the code, and when the code is executed, the cloud management platform performs the method according to any one of claims 1 to 6.

20. A computer storage medium, wherein the computer storage medium stores a computer program, and when the program is executed by a computer, the computer is enabled to implement the method according to any one of claims 1 to 6.

21. A computer program product, wherein the computer program product stores instructions, and when the instructions are executed by a computer, the computer is enabled to implement the method according to any one of claims 1 to 6.
